# EUROPEAN PATENT APPLICATION

(11) **EP 4 311 622 A1**
(43) Date of publication of application: **31.01.2024**
(21) Application number: 22187860.6
(22) Date of filing: 29.07.2022
(51) Int. Cl.: B23K 26/0622, B23K 26/24, B23K 26/324, B23K 26/352, B23K 26/364, B23K 26/60, B23K 37/04, B29C 65/16, B29C 65/44, B29C 65/00, H01F 27/24, B23K 103/04, B23K 103/00

(54) **METHOD FOR ASSEMBLING AND DISASSEMBLING AN ARRANGEMENT OF ONE OR MORE SUBSTRATES, ARRANGEMENT OF ONE OR MORE SUBSTRATES**

(71) Applicant: Laser Engineering Applications, 4102 Seraing (BE); Institut Polytechnique Unilasalle, 60026 Beauvais Cedex (FR); Fundacion Andaltec, 23600 Martos, Jaén (ES)
(72) Inventor: HENROTTIN, Anne, 4920 Sougné-Remouchamps (BE); PATARS, Jérôme, 4550 Nandrin (BE); VENDRAMINI, Alexandre, 4577 Vierset-Barse (BE); MALOBERTI, Olivier, 60600 Agnetz (FR); CASTILLO GONZALES, Jesús, 23600 Martos (ES); NAVAS MARTOS, Francisco Javier, 23650 Torredonjimeno (ES)
(74) Representative: Gevers Patents

(57) **Abstract**

The present invention relates to a method for assembling an arrangement of one or more substrates, the method comprising arranging the one or more substrates in an arrangement in which at least one surface is defined by a plurality of edges of the one or more substrates; structuring the at least one surface with a structuring laser beam capable of manufacturing one or more grooves in the at least one surface; placing an insulating part in contact with the at least one surface; applying a pressure to maintain contact between an insulating part and the at least one surface; welding the one or more substrates and the insulating part by heating the one or more substrates so as to reach in the insulating part a temperature melting at least a portion of the insulating part into the one or more grooves of the at least one surface. The method also relates to a disassembling method and an arrangement of one or more substrates.

## Description

### Technical field

The invention relates to a method for assembling and disassembling an arrangement of one or more substrates and an arrangement of one or more substrate.

### Prior art

The document JP2019217522 discloses a method of manufacturing a metal sheet laminate, such as electromagnetic cores. A material plate is cut into metal sheets into a holding hole by an upper punch and a lower punch. The metal sheets are sequentially laminated in a state in which they are in close contact with each other inside the holding hole. The side surface of the metal sheets are exposed to a welding laser beam to weld the metal sheets. Metal sheet laminated products are dropped and taken out when they reach the lower end of the holding hole.

However, the drawback of this solution is that the welding area is electrically conducting which generates short circuits between the metal plates via the edges of the latter.

There is a need for a method that avoid this drawback.

### Disclosure of the invention

An object of the invention is to provide a method for assembling an arrangement of one or more substrates, the method comprising: Providing one or more electrically conductive substrates having a thickness defining an edge and at least one insulating part having a melting point lower than the melting point of the one or more substrates; Arranging the one or more substrates in an arrangement in which at least one surface is defined by a plurality of edges of the one or more substrates; Structuring the at least one surface with a structuring laser beam capable of manufacturing one or more grooves in the at least one surface; Placing the insulating part in contact with the at least one surface; Applying a pressure to maintain contact between the insulating part and the at least one surface; Welding the one or more substrates and the insulating part by heating the one or more substrates so as to reach in the insulating part a temperature melting at least a portion of the insulating part into the one or more grooves of the at least one surface.

According to an embodiment, the one or more substrates have a main face, the method further comprising, at the arranging step, arranging the one or more substrates such that an insulating layer is between two main faces.

According to an embodiment, during the structuring step, a pressure is applied to the arrangement to meet the same focusing conditions during the structuring of the surface.

According to an embodiment, the method further comprises at the arranging step, performing the arrangement by winding or stacking the one or more substrates.

According to an embodiment, the one or more substrates are in the form of a foil, a sheet, a plate, a disc, a ribbon, a rod, or a wire.

According to an embodiment, the structuring laser specifications are:
- Wavelength between 300nm and 10.6µm, preferably between 900nm and 1100 nm, more preferably 1030nm;
- Pulse duration between 1fs and 1000fs, preferably 500fs;
- Focusing and spot size between 1µm up to 200µm, preferably 20µm;
- Laser power between 1W and 300W, preferably 15W;
- Repetition frequency between 1 kHz and 10GHz, preferably 500kHz;
- Scanning speed between 1mm/s and 400m/s, preferably 700mm/s.

According to an embodiment, a plurality of surfaces are defined by a plurality of edges of the one or more substrates, the method comprising: Structuring the surfaces with a structuring laser beam capable of manufacturing one or more grooves in the surfaces; Placing an insulating part on a respective surface; Applying a pressure so as to maintain contact between the insulating parts and the respective surface; Welding the one or more substrates and the insulating parts by heating the one or more substrates so as to reach in the insulating parts a temperature melting at least a portion of the insulating parts into the one or more grooves of the surface.

According to an embodiment, the arrangement has top and bottom main faces linking two surfaces defined by a plurality of edges, the method further comprising: Providing insulating parts having a melting point lower than the melting point of the one or more substrates; Structuring the top face and/or bottom face with the structuring laser beam capable of manufacturing one or more grooves in the top face and/or bottom face; Placing an insulating part in contact respectively with the top face and/or bottom face; Applying a pressure so as to maintain contact between the insulating part and the respective top face and/or bottom face; Welding the one or more substrates and the insulating part by heating the one or more substrates so as to reach in the insulating part a temperature melting at least a portion of the insulating part into the one or more grooves of the top face and/or bottom face.

According to an embodiment, the method further comprises: Providing a device comprising vertical and horizontal runners and a cover; During the step of applying a pressure, pressing the cover on the insulating part to maintain contact between the insulating part and the at least one surface and pressing the runners on the one or more substrates.

The invention also relates to a method for disassembling the arrangement obtained by the method as described above, comprising a step of heating the insulating part.

According to an embodiment, the heating is performed with a laser source heating the one or more substrates, a heat gun or a low temperature furnace.

The invention also relates to an arrangement comprising one or more electrically conductive substrates having a thickness defining an edge, the arrangement further comprises: At least one surface defined by a plurality of edges of the one or more substrates, the at least one surface being structured with a structuring laser beam capable of manufacturing one or more grooves and An insulating part having a melting point lower than the melting point of the one or more substrates, the insulating part having at least a portion melt into the one or more grooves of the at least one surface.

According to an embodiment, the one or more substrates have a main face, the arrangement comprising an insulated layer between two main faces.

According to an embodiment, the arrangement has top and bottom main faces linking two surfaces defined by a plurality of edges, the arrangement comprising insulating parts having a melting point lower than the melting point of the one or more substrates, the insulating parts having at least a portion melt into the one or more grooves of the top face and/or bottom face.

According to an embodiment, the arrangement is a winding or a stack of one or more substrates in the form of a foil, a sheet, a plate, a disc, a ribbon, a rod, or a wire.

In the framework of this document, the use of the indefinite article "a", "an" or the definite article "the" to introduce an element does not exclude the presence of a plurality of these elements. In this document, the terms "first", "second", "third" and the like are solely used to differentiate elements and do not imply any order in these elements.

In the framework of the present document, the use of the verbs "comprise", "include", "involve" or any other similar variant, as well as their conjugational forms, cannot exclude the presence of elements other than those mentioned. When the verb "comprise" is used for defining an interval by the terms "comprised between" two values, these two values should not be interpreted as excluded from the interval.

All the embodiments of the method of assembling according to the invention and the advantages of these embodiments apply mutatis mutandis to the present arrangement according to the invention, and vice versa.

### Brief description of the figures

Other characteristics and advantages of the present invention will appear on reading the following detailed description, for the understanding of which, it is referred to the attached figures where:
- Figures 1 to 6 illustrates examples of different embodiments of arrangements of one or more electrically conductive substrates;
- figure 7 illustrates an example of pattern of grooves;
- figure 8 illustrates a welding step of the method of assembling;
- figure 9 illustrates welding areas on the substrates;
- figure 10 illustrates a detail of an embodiment of arrangement;
- figures 11 and 12 illustrate a device used in the method of assembling;
- figure 13 illustrates an example of arrangement 10 in the form of a magnetic core of a DC choke
- Figure 14 illustrates an example of an apparatus to apply pressure during the structuring step.

The drawings in the figures are not scaled. Similar elements can be assigned by similar references in the figures. In the framework of the present document, identical or analogous elements may have the same references. The presence of reference numbers in the drawings cannot be considered to be limiting, in particular if these numbers are indicated in the claims.

### Description of specific embodiments of the invention

The invention relates to a method for assembling an arrangement of one or more substrates. The method comprises providing one or more electrically conductive substrates having a thickness defining an edge and at least one insulating part having a melting point lower than the melting point of the one or more substrates. The method also comprises arranging the one or more substrates in an arrangement in which at least one surface is defined by a plurality of edges of the one or more substrates. Then, the at least one surface is structured with a structuring laser beam capable of manufacturing one or more grooves in the at least one surface and the insulating part is placed in contact with the at least one surface. A pressure is applied to maintain contact between the insulating part and the at least one surface. The method also comprises welding the one or more substrates and the insulating part by heating the one or more substrates so as to reach in the insulating part a temperature melting at least a portion of the insulating part into the one or more grooves of the at least one surface. The method makes it possible to assembly the arrangement of one or more substrates while avoiding short circuits between the substrates via the edges of the substrates.

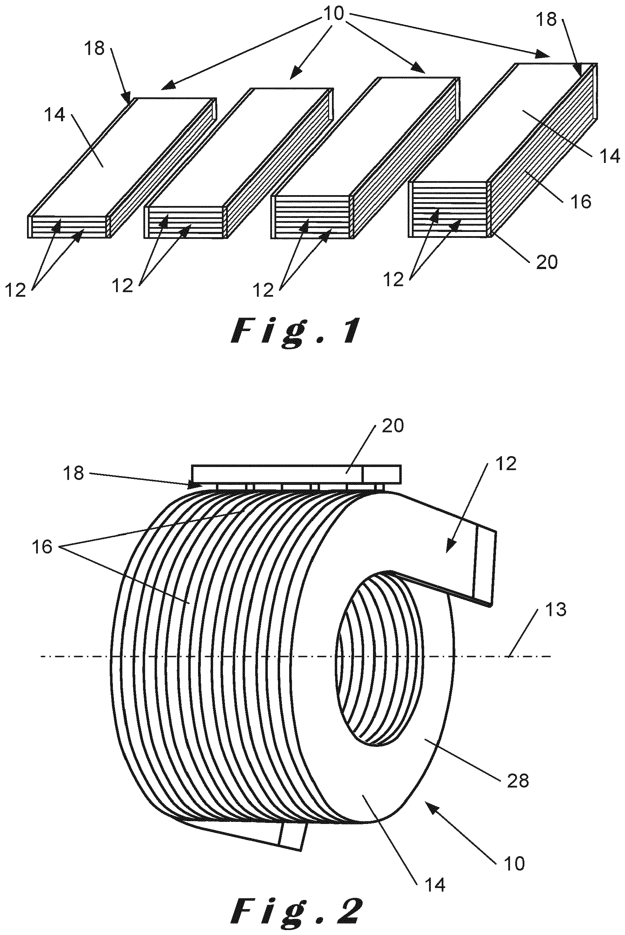

Figures 1 to 6 illustrates examples of the one or more electrically conductive substrates 12. The substrate(s) 12 provided in the method are of a material able to conduct electricity. The substrate(s)12 may be used in magnetic circuits used in electrical and magnetic components (such as electrical machines, actuators, inductors, transformers, sensors, capacitors, batteries etc.). The substrate(s) may be laminated substrate(s). Considering that a magnetic flux to be conducted via the substrate(s) remains in the skin depth, it is advantageous to use laminated substrate(s) rather than a unique thick material where there are induced current losses in the material.

The method can be implemented for any metallic substrate for which it is expected to make an arrangement of substrate(s). The thickness of the substrate(s) depend on the material and the use. It is especially adapted to soft magnetic substrates made of any electrical steels or special alloys containing Iron and additional compounds such as Silicon, Cobalt, Nickel... Preferably, the substrate(s) are of Silicon Iron electrical steels because of the weldability of this frequently used electrical steels in the industry. For example, the substrate(s) may be
- Grain Oriented Electrical Steel (GOES) : an alloy with Fe and Si with a Si composition of 2.5% - 6.5% (in wt), the rest being Fe, a thickness of 0.1-0.4 mm, preferably, of 0.18-0.35 mm, used for magnetic components, or transformers, chokes, inductors, sensors ...
- Non Grain Oriented Electrical Steel (NGOES) : an alloy with Fe and Si with a Si composition of 2.5% - 6.5% (in wt), the rest being Fe, a thickness of 0.35-1mm, preferably 0.5-1mm, used for electrical machines, or
- An alloy with Fe and Ni with a composition of 50% each (in wt), a thickness of 0.05-0.35mm, used for magnetic components, or
- An alloy with Fe, Co and V with a composition of respectively 49%, 49% and 2% (in wt), a thickness of 0.3-0.6mm, used for magnetic components, or
- A soft ferromagnetic alloy (Fe, Ni, Co based), an electrical conducting alloy (Cu, Al based) or a conducting electrode, made of various metals, metal oxides, conducting polymer, graphits...

Any kind of metallic substrate(s) with similar optical and thermal properties and geometries may be used.

The substrate(s) 12 may be used to form the magnetic core or total magnetic circuit in the final component, with various geometries. In that sense, an arrangement of one or more substrates is a particular geometry. An arrangement of the substrate(s) is a particular layout of one or more substrates for a particular use. A single substrate may be arranged to achieve a certain shape. The substrate may be shaped, conformed for a particular use. A plurality of substrates may be arranged together to achieve a certain shape. The substrates may be shaped, conformed together for a particular use. A plurality of substrates means two substrates or more.

The one or more substrates 12 may have one or two larger dimensions in one or two perpendicular directions. The substrates 12 may have a smaller dimension than the other one or two dimensions. The smaller dimension is the thickness defining an edge. The arrangement of the one or more substrates 12 is such that a surface 18 is defined by a plurality of edges of the one or more substrates. A consecution of edges of the one more substrates are forming a surface. The surface is to be understood in the mathematical sense. In case of an arrangement with a single substrate, the substrate may be arranged, shaped to bring the same edge back on itself several times, forming a sequence, a consecution of the same edge. The same edge appears consecutively next to itself. The plurality of the same edges defines the surface. In case of an arrangement with several substrates, the substrates may be arranged, shaped to have respective edge next to each other, forming a sequence, a consecution of different edges. A plurality of edges appear consecutively next to each other. The plurality of different edges defines the surface.

The one or more electrically conductive substrates 12 may be flat. The one or more electrically conductive substrates 12 may be a sheet, a foil or a plate. In that sense, and before any arrangement, the one or more substrates may extend in one (length) or two (length and width) larger dimensions and have a smaller dimension than the other one or two dimensions. The smaller dimension is the thickness defining the edge (orthogonal to the two other dimensions). The one or more electrically conductive substrates 12 may also be a in the form of a disc. In that sense, and before any arrangement, the one or more substrates may extend in two larger dimensions (diameters) and have a smaller dimension than the other two dimensions. The smaller dimension is the thickness defining the edge.

The one or more electrically conductive substrates 12 may be a ribbon. In that case, the substrates have one larger dimension (length), and two other smaller dimensions. One of the smaller dimensions (width) is perpendicular to the larger dimension - in a plane. The other smaller dimension, the thickness, defining the edge is orthogonal to the two other dimensions.

The one or more electrically conductive substrates 12 may be a rod. The substrates have one larger dimension and a smaller dimension. The larger dimension is the length of the rod. The smaller dimension is a section orthogonal to the length. The section may be of any shape such as circular or polygonal (such as a square or a diamond). The one or more electrically conductive substrates 12 may be a wire.

The arrangement obtained in the method are depicted on figures 1-6, as a matter of examples.

On figure 1, a plurality of substrates 12 are provided in the form of sheets or plates. The substrates 12 are arranged in an arrangement 10 in the form of a stack. The arrangement is a stack of said substrates 12. The substrates 12 have two larger dimensions in two perpendicular directions, defining their main faces 14. The main faces 14 of each substrate are stacked on top of each other. The smaller dimension of the substrates 12 is the thickness defining the edge 16 of the substrates 12. The arrangement 10 is such that the surface 18 is defined by a plurality of edges of the substrates 12, on the side of the stack. The substrates 12 are arranged, shaped to have edges next to each other, forming the sequence of several edges. The plurality of different edges defines the surface 18.

On figure 2, a single substrate 12 is provided in the form of a ribbon. The substrate 12 is arranged in an arrangement 10 in the form of a winding. The arrangement is a winding of said substrate 12. The substrate has one larger dimension, the length of the ribbon, and two other smaller dimensions. One of the smaller dimensions is perpendicular to the larger dimension - in a plane and forming the main face 14. The other smaller dimension is the thickness defining the edge, orthogonal to the two other dimensions. The substrate is wound around an axis 13. The thickness of the substrate 12 is parallel to the axis 13. The main face 14 is facing itself. The arrangement 10 is such that the substrate is arranged to bring the same edge back on itself several times, forming the sequence of the same edge. The same edge appears consecutively next to itself. The plurality of the same edge defines the surface 18.

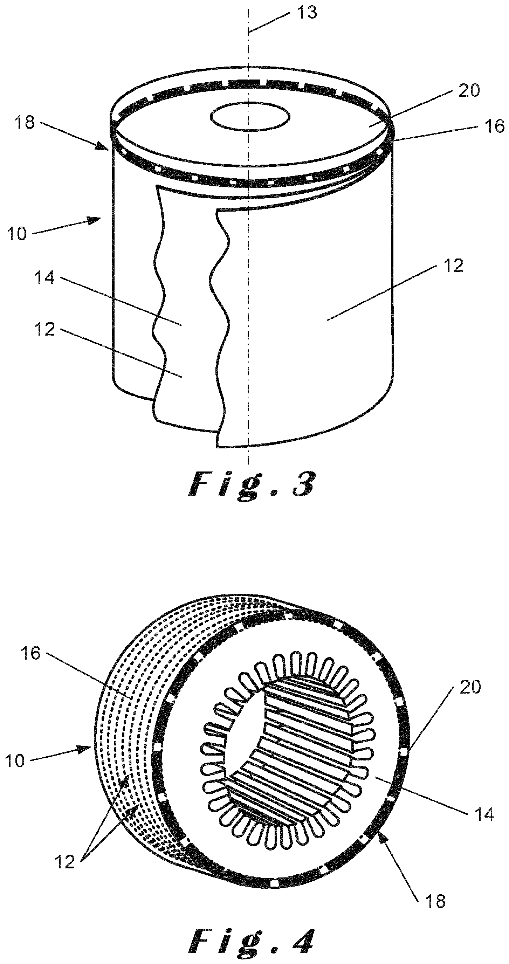

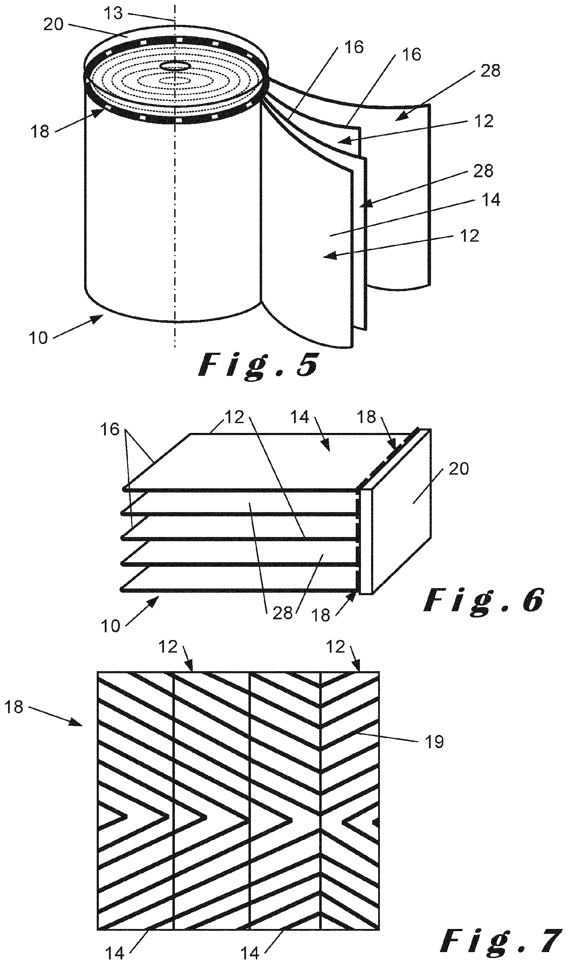

On figures 3 and 5, two substrates 12 are provided in the form of a foil. The substrates 12 are arranged in an arrangement 10 in the form of a winding. The arrangement is a winding of the substrates 12. The substrates are wound into a cylinder around an axis 13. The substrates 12 have two larger dimensions in two perpendicular directions, defining their main face 14. The main face 14 of the substrates are facing each other and are wounded around the axis 13. The smaller dimension of the substrates 12 is the thickness defining the edge 16 of the substrates 12. The thickness of the substrates 12 is orthogonal to the axis 13. The arrangement 10 is such that the substrates are arranged to wound the edges around the axis 13, forming the sequence of edges. The edges appear consecutively, as a spiral. The plurality of different edges defines the surface 18.

On figure 4, a plurality of substrates 12 are provided in the form of discs. The substrates 12 are arranged in an arrangement 10 in the form of a stack. The arrangement is a stack of said substrates 12. The substrates 12 have two larger dimensions in two perpendicular directions (diameters), defining their main faces 14. The main faces 14 of each substrate are stacked on top of each other. The smaller dimension of the substrates 12 is the thickness defining the edge 16 of the substrates 12. The arrangement 10 is such that the surface 18 is defined by a plurality of edges of the substrates 12. The substrates 12 are arranged, shaped to have edges next to each other, forming the sequence of several edges. The plurality of different edges defines the surface 18.

On figure 6 a plurality of substrates 12 are provided in the form of foils. The substrates 12 are arranged in an arrangement 10 in the form of a stack. The arrangement is a stack of said substrates 12. The substrates 12 have two larger dimensions in two perpendicular directions, defining their main faces 14. The main faces 14 of each substrate are stacked on top of each other. The smaller dimension of the substrates 12 is the thickness defining the edge 16 of the substrates 12. The arrangement 10 is such that the surface 18 is defined by a sequence of edges of the substrates 12. The substrates 12 are arranged, shaped to have edges next to each other, forming the sequence of several edges. The plurality of different edges defines the surface 18.

According to the figures, the arrangements 10 may be used for coils, stators, capacitors, batteries.

The surface 18 defined by the plurality of edges includes a welding area. By placing the edge of the substrate(s) in a neighbouring manner, it is possible then to assemble (to join, to fix) the substrate(s) along a significant distance according to the industrial use. Because the process is performed at a relatively low temperature without melting the metallic substrate(s), no damage of the physical properties (magnetic properties, electrical properties, electromagnetic properties, electrochemical properties ...) is observed and the welding area can be as large as necessary.

The method also comprises a step of structuring the surface 18 with a structuring laser beam capable of manufacturing one or more grooves in the surface 18. The structuring (or in other words, the texturization) of the surface 18 makes it possible to prepare the substrate(s). By structuring the surface 18, it is meant to structure a part or the whole surface 18. During this step, the welding area is prepared by structuring part or the whole surface 18, according to the industrial application and thus, to improve the final robustness of the arrangement. The structuring step consists in engraving the surface 18 with grooves that follow specific patterns thanks to any adapted technique. Figure 7 illustrates an example of pattern of grooves. The pattern comprises lines 19 formed by the grooves. The lines 19 may form geometric shapes, for example a diamond-like shape. It is possible that the shapes are polygonal (such as squares, rectangles, hexagons, triangles, etc.). In particular, the shapes may pave the surface 18. The shapes may be grouped into groups. Each group may comprise a plurality of concentric forms. The groups may be arranged in rows. Possibly, a first row may be imbricated in a second row. The pattern of lines 19 may also be a plurality of parallel lines 19 separated by a constant or non-constant distance. The pattern of lines 19 may also be a plurality of grouped parallel lines, with a constant or non-constant distance between the groups. The patterns of lines 19 may comprise lines such that the lines are imbricated in the neighbouring line. The pattern of lines 19 may be zigzags comprising line segments.

Preferably, the structuring step is performed with the use of a Ultra-Short-Pulsed-Laser (USPL). Such a laser performs an ablation of the substrate(s). The main advantages of the USPL, performing micromachining process, is that it is able to engrave very properly the surface 18. Thanks to the short duration pulses (in the range of femtoseconds), the beam effect on the substrate is athermal or almost athermal. The USPL limites or even avoids any thermal effect, by removing nanoparticles of materials by sublimation and by generating a groove profile with limited recast (and even no recast) along the grooves and clear width and depth compatible to the welding specifications. The effect of short laser pulse duration for structuring the edges of the substrate(s) is to decrease the heating of the substrate(s) during the structuring, and therefore to limit the deformation of the substrate(s). Cancelling or limiting deformation of the substrate(s) during structuring allows increasing global solidity of the arrangement, as the contact surface of the surface 18 remains flat. Thus, this contributes to the better adhesion between the substrates and the insulating part. This is especially advantageous for thin substrate(s), with a thickness of less than 5mm, even preferably less than 2mm, more preferably, less than 1mm. The USPL micromachining process can achieve the whole quality requirement if the ablation conditions are satisfied. Alternatively to USPL, Short-pulsed lasers (with pulse duration between 1 and 400 nanoseconds) can also be used. This type of laser makes it possible to reach high structuring speeds.

The laser wavelength may be chosen such that it maximizes the absorption coefficient of metal at this wavelength. The pulse duration is preferably very short (< 1 ps (10⁻¹² s)) in order to achieve the ablation conditions with the aforementioned advantages. The spot size and focusing conditions control the groove width. The groove width is preferably compatible with the wettability of the insulating part (such as a melted plastic sheet) used during the welding step. The laser power, the repetition frequency and the scanning speed control the groove's depth and the recast height, in addition to the energy consumption and the manufacturing speed. The laser specifications for USPL may be:
- Wavelength (λ) between 300nm and 10.6µm, preferably between 900nm and 1100 nm, more preferably 1030nm;
- Pulse duration (τ) between 1fs and 1000fs, preferably 500fs;
- Focusing and spot size (φ) between 1µm up to 200µm, preferably 20µm;
- Laser power (P) between 1W and 300W, preferably 15W;
- Repetition frequency (f) between 1 kHz and 10GHz, preferably 500kHz;
- Scanning speed (v) between 1mm/s and 400m/s, preferably 700mm/s.

The aforementioned laser specification makes it possible to perform the structuration at a high scanning speed, in order to achieve industrial speed. At the time, the recast is limited (or even no recast is produced) in order to have a surface 18 as flat as possible. The chosen pulse durations make it possible to generate a beam effect on the substrate that is athermal or almost athermal. The chosen focusing and spot size make it possible to perform grooves with a small width. This makes it possible to have a proportion of non-structured zones (in comparison to structured zones) enough to transfer the heat during the welding step to the insulating part 20. The chosen laser power makes it possible to reach the desired depth in the grooves while limiting the recast and the thermal effect. The chosen repetition frequency makes it possible to obtain continuous grooves with an effective recovery rate between the pulses. An advantageous example to achieve all these requirements is the Ultra Short Pulsed Laser (USPL).

The grooves are performed at the edges.

The groove profile may have the following specifications:
- Groove width (δ) between 1µm and 200µm, preferably 50µm
- Groove depth (p) between 1µm and 200µm, preferably between ~40µm-60µm
- Recast height (h) up to 5µm, preferably 2µm or less.

Preferably, during the structuring step, a pressure is applied to the arrangement 10 to meet the same focusing conditions during the structuring of the surface 18. The pressure maintains and fixes any arrangement of the one or more substrates. The pressure maintains closely the edge of the substrate(s). During the structuring step, the edges are all located at the same level (horizontal or vertical plane) so that these edges are as close as possible during the structuring step. The contact pressure between the substrate(s) fit a specification given by the application.

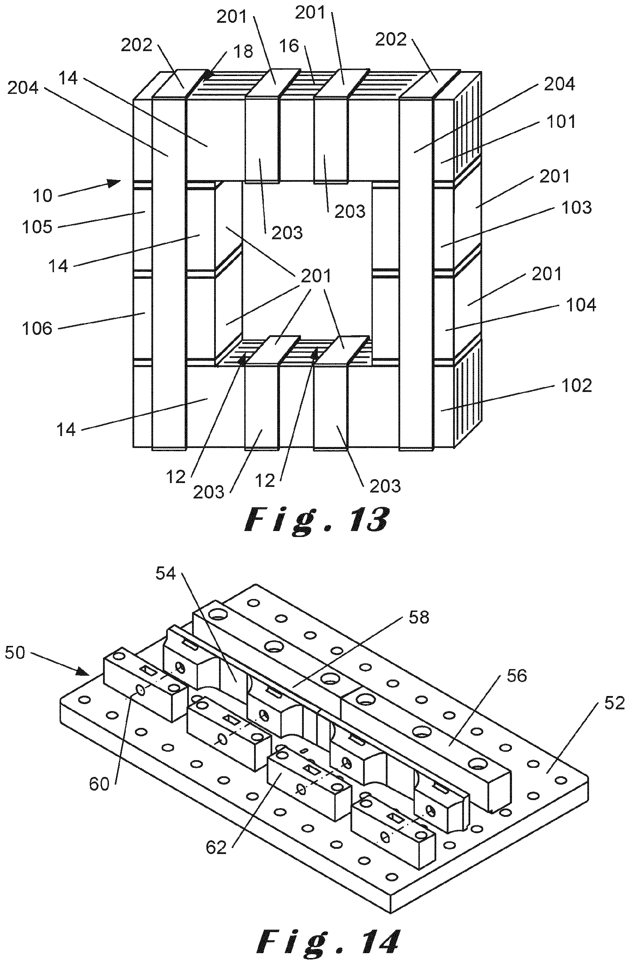

Figure 14 illustrates an example of an apparatus 50 to apply pressure during the structuring step. The apparatus 50 comprises a base plate 52 on which movable jaws 54 are pressing an arrangement of substrate(s) 12 against fixed jaws 56. The arrangement of substrate(s) is situated in the space 58 between the jaws 54, 56. The jaws 54 are movable thanks to pressing means such as screws extending along lines 60. The number of pressing means and movable jaws 54 depend on the size of the arrangement. Four of each are depicted on figure 14 as a matter of example. The screws may be operated across blocks 62 in order to press and maintain the arrangement of substrate(s) during the structuring step. The apparatus 50 makes it possible to hold the surface 18 flat so that the same focusing conditions are met during structuring step of the surface 18. This improves the quality of the structuring step - what is advantageous for the quality of the welding step. The apparatus 50 - and especially the jaws and blocks - is adapted to the form and size of the arrangement of substrate(s) 12.

In an embodiment, the substrate(s) is hold in a given arrangement during the structuring phase and after, so that the pattern of lines 19 is kept for the following steps of the method. For example, the substrate(s) is hold in a given arrangement with a tape or clamps.

The method also comprises a step of placing an insulating part 20 in contact with the surface. The part 20 may be an insulating material, avoiding short circuits between the substrate(s) via the part 20 holding the substrate(s) in the form of the arrangement. The part 20 is a thin material, making it possible to be welded without thermal effects in the substrate(s). At the following welding step, a welding occurs by heating and melting the insulating part interface next to the substrate(s). This lets the resulting soft material go inside the grooves to make a join thanks to the patterns obtained during the structuring step. The melting of the insulating part 20 at the interface between the insulating part 20 and surface 18 (the edge of the substrate(s)), corresponding to welding area, is achieved thanks to heat. Possibly the welding is achieved with a laser induced heating of the substrate(s) at a wavelength for which the insulating part 20 is transparent.

Thus, the choice of the insulating part 20 may satisfy one or several of the following specifications. One specification is related to the optical properties. The insulating part 20 may be transparent or very weakly absorbent at the laser wavelength used during the welding step (if laser is used for welding). One specification is related to the thermal properties. Preferably, the insulating part 20 soften and melt at a temperature between the maximum working temperature (about 200°C) and the maximum temperature achieved thanks to the tool used for the welding step (about 500°C). The insulating part 20 preferably stays solid to keep strong the welding area up to 200°C. One specification is related to the insulating properties. The insulating part 20 may have a minimum electrical resistance of several MegaOhms (MΩ) (0.25 MΩ for a nominal voltage of 250 V, 0.5 MΩ for a nominal voltage of 500 V, 1 MΩ for a nominal voltage of 1000 V or more than 50-1000 Ω/V depending on the standards of each application, the insulation resistance being given by the resistivity multiplied by the welding surface area and divided by the insulation thickness) and a disruptive voltage bigger than 5 times the nominal voltage to insulate the metal cores (this disruptive voltage being given by the dielectric strength multiplied by the insulation thickness). One specification is related to the mechanical properties. In general young modulus and tensile strength can be at least 1500 MPa and 60 MPa respectively, in order to achieve the mechanical robustness that ensure the proper arrangement working, under the expected mechanical stress conditions. One specification is related to the cost.

Examples of the material for the insulating part 20 fulfilling one or more of the above properties are the Polyphenylsulfone (PPSU), the polycarbonate (PC) or Polyether ether ketone (PEEK). These materials ensure the best compromise between the quality, performances and cost.

The specifications of PC may be thickness: 0.3-0.8 mm, transparency: 80 % , Vicat temperature: 150ºC, melting temperature: 290 ºC, dielectric strength: 60kV/mm, Young modulus: 2200MPa, tensile strength: 70MPa, cost (year 2020): 10€/kg.

The specifications of PPSU may be thickness: 0.3-0.8mm, transparency: 90 %, Vicat temperature: 220 ºC, melting temperature: 350ºC, dielectric strength: 190kV/mm, Young modulus: 1590MPa, tensile strength: 68MPa, cost (year 2020): 85€/kg.

The specifications of PEEK may be thickness: 0.3-0.8mm, transparency: 90% Vicat temperature: 240ºC, melting temperature: 350ºC, dielectric strength: 190kV/mm, Young modulus: 1800MPa, tensile strength: 120MPa, cost (year 2020): 290€/kg.

The volumetric electrical resistivity for PC, PPSU, PEEK is typically from 10¹⁴ to 10¹⁷ Ω.cm, with usually the resistivity of standard PC > the resistivity of standard PPSU > the resistivity of standard PEEK.

The Vicat temperature is more generally speaking a softening temperature.

Any kind of insulating part with similar physical properties and geometries may be used.

The method also comprises a step of applying a pressure to maintain contact between the insulating part 20 and the surface 18. This pressure promotes the fact that the heat that will be applied is efficiently transferred to the insulating part 20 so that the later melts quickly. This reduces the time during which heat is applied to the substrate(s) and thus, reduces the risk of deformation of the substrate(s). In addition the pressure ensures that the material of the insulating part 20 enters the grooves structured on the surface 18. This enhance the quality of the welding step and the quality of the assembly of the arrangement. The interface between the insulating part 20 and the surface 18 (corresponding to the edge of the substrate(s)) is under pressure leading to a welding area.

Then, the method comprises a step of heating the one or more electrically conductive substrates 12 so as to reach in the insulating part 20 a temperature melting at least a portion of the insulating part into the one or more grooves of the surface 18. This leads to the welding of the insulating part 20 to the surface 18, and thus, the welding of the insulating part 20 to the substrate(s). The substrate(s) are thus assembled and fixed in an arrangement exemplified on figures 1 to 6.

The advantage of the assembled arrangement obtained with this method is that short circuits are avoided between the substrate(s) via the edges of the substrate(s) or more generally, via the means assembling the arrangement - contrarily to solutions where the substrate(s) would be fixed with a welding directly applied to the edges of substrate(s) or would be fixed by crimping with bars or rods through or around the substrate(s), or would be fixed by strapping with a metal tape (where short circuits occur via the edges and/or the means assembling the substrate(s)).

Another advantage of the assembled arrangement obtained with this method is that there is no need for further insulation of the arrangement with other electrical parts in the environment, such as the coils, yokes, housings, of the electrical and magnetic components - contrarily to solutions where the substrate(s) would be fixed with a welding directly applied to the substrate(s) or would be fixed by crimping with bars or rods through or around the substrate(s), or would be fixed by strapping with a metal tape.

A further advantage of the assembled arrangement obtained with this method is that there is less heat generated by the welding step and thus less stress and damages of the properties of the arrangement (such as magnetic properties such as loss and permeability) - contrarily to a solution where the substrate(s) would be fixed with a welding directly applied to the substrate(s). Also, the method of the invention causes less stress and damages to the structure of the substrate(s) (and thus, less damages of the properties of the arrangement) because the structuring step occurs at the micro-scale - contrarily to solutions where the substrate(s) would be fixed by crimping with bars or rods into holes drilled through the substrate(s) or into deep trenches cut at the outer edges of the substrate(s).

Yet another advantage of the assembled arrangement obtained with this method is that vibrations in the arrangement of substrate(s) are reduced and thus delamination is avoided - contrarily to solutions where the substrate(s) would be fixed by strapping with a metal or insulated tape, because the strapping is not homogeneous all around the substrate(s) and no welding exists between the substrate.

Also, the invention is advantageous with respect to heat dissipation during use of the arrangement of substrate(s). Indeed, the welding of the insulated part on the edges of the substrate(s) make it possible to allow the dissipation of the heat - contrarily to solutions where the substrate(s) would be fixed by strapping an insulating tape, because the substrates are completely surrounded to ensure mechanical strength, which creates a thermal barrier preventing heat dissipation.

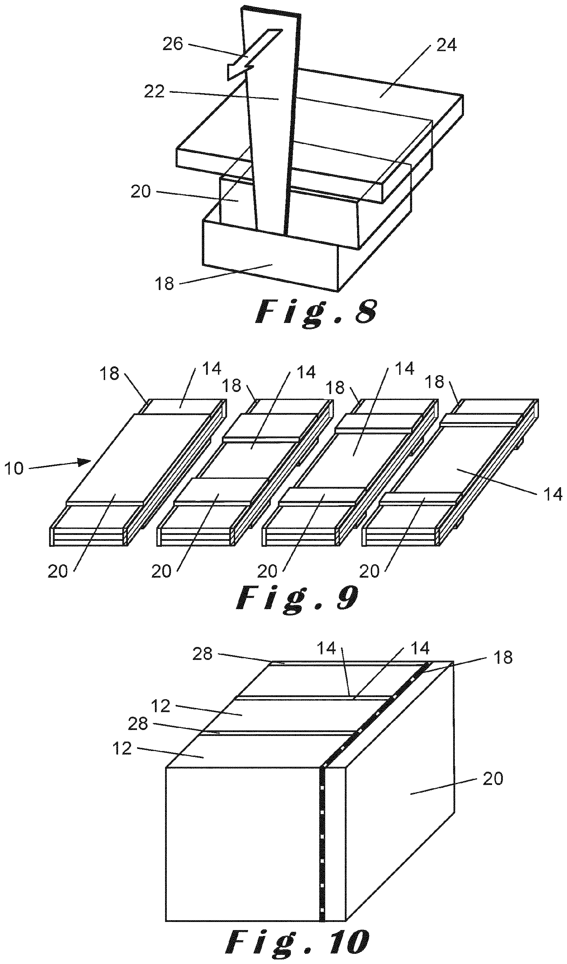

The welding step can be performed with a furnace. Alternatively, the welding step can be performed by a process called transmission welding, as depicted on figure 8. It consists in using a laser source 22 having a high transmission through the insulating part 20. A cover 24 for pressing the insulating part against the surface 18 is used. The cover is pressed on the insulating part 20 to maintain contact between the insulating part 20 and the at least one surface 18. The cover 24 is transparent to the laser source 22 forming the welding beam. Consequently, the laser will not affect the insulating part 20 directly and instead will irradiate the surface 18 defined by the edges of the substrate(s) 12, heating up the surface 18. Then, the heat will be transferred to the insulating part 20 by heat conduction, resulting in a local melting of the insulating part at the interface between insulating part and surface 18, which will flow in the grooves. To perform this step, continuous IR laser source can be used. The laser can be combined with a scanner head system to move the laser according to arrow. There are also some parameters to optimize during this step, which are the laser power, laser speed and clamping force mainly.

The heating can be achieved using a continuous diode laser of 980 nm wavelength and a maximum laser power of 110 W with the following set of parameters: laser power of 80 W, laser speed of 1 mm/s, and clamping force of 100 N. Plastic-metal bonding (between insulating part 20 and surface 18) with shear stress up to 8 MPa can be reached with this set of parameters. Moreover, a six-axis industrial robot may be used to place the laser point in the desired locations.

As previously described, the welding area may cover the whole or part of one surface 18 defined by the edge of the substrate(s). In addition, the welding area may be on several surfaces 18 of the arrangement of substrate(s). For example, on figure 1 and 6, the welding area may be on two surfaces 18, on two (opposite) sides of the main face 14 of the substrate. The sides of the main face 14 are along the larger dimension (corresponding for example to a length of the substrate(s) in the form of a sheet). Alternatively or in combination, the welding areas may also be on two other surfaces 18, on other sides of the main face 14 of the substrate. These other sides of the main face 14 are along another larger dimension - smaller than the preceding one (corresponding for example to a width of the substrate(s) in the form of a sheet). On figures 2 and 4, the welding area may be on the outer surface 18 of the winding but also, on figure 2, the welding area may be on the inner surface 18 of the winding; the welding area can be according to one or several lines of the surface 18, or the whole height of the arrangement. On figures 3 and 5, the welding area can be all the surface 18 defined by the winding, or a in the form of a line (according to a diameter for example) or in the form of a piece of cake; the welding area can also be in the form of a donut, with a hole in the middle. On figure 3 and 5, the welding area may be on the top surface 18 but also, the welding area may be on the bottom surface 18 of the winding. Generally speaking, the position and extend of the welding area on the surface 18 is adapted to the industrial application of the arrangement.

It also possible to apply the welding area not only on surface(s) 18 present on the edge of the substrate(s), but also on other locations of the substrate(s). For example, the method can be applied on the top and/or bottom faces of the arrangement . The advantage of having the welding area on additional locations is to reinforce the strength of the arrangement - what is in particular advantageous in case of an arrangement used in an environment with high vibrations. Because the method is performed at a relatively low temperature without melting the metallic substrate(s), no damage of the magnetic properties is observed and the welding area can be as large as necessary at the top and/or bottom faces of the substrate(s). This reduces even more the delamination risks and makes it possible to join different arrangements together with the same method.

Figure 9 illustrates this further embodiment. The method is applied on at least one main face 14. Preferably, the method is applied on two main faces 14, on the top and bottom faces of the arrangement. This ensures to surround the arrangement (a stack of several substrates on figure 9). Figure 9 also illustrates that the welding area(s) on the main face(s) 14 cover all or part of the main face(s) 14. It can be more than 10%, more than 25%, more than 50% of the main face(s), up to 100% of the main face(s). It can be a single welding area or it can be two or more strips on the main face(s). The advantage of the method is that it can be adapted to the industrial application of the arrangement. This is also true for the example of arrangements of the other figures.

With respect to figure 9, the method comprises structuring the top face 14 and/or bottom face 14 with the structuring laser beam capable of manufacturing one or more grooves in the top face 14 and/or bottom face. Strategic areas are structured. The pattern of grooves is as described on figure 7. Then, the insulating part 20 is placed in contact respectively with the top face 14 and/or bottom face 14 and a pressure is applied so as to maintain contact between the insulating parts 20 and the respective top face and/or bottom face. The method comprises the welding of the one or more substrates 12 and the insulating part 20 by heating the one or more substrates 12 so as to reach in the insulating part 20 a temperature melting at least a portion of the insulating part 20 into the one or more grooves of the top face and/or bottom face. This embodiment is preferably performed after the edge of the substrate(s) have been structured and welded. It is proposed to keep the substrate(s) at the top or the bottom fixed and flat during the method and to avoid any deformation of the substrate(s).

In another embodiment, the method comprises, at the arranging step, arranging the one or more substrates 12 such that an insulating layer 28 is between two main faces 14. The insulating layer 28 is preferably between the main faces of the substrate(s) as well as between the edges of the plurality of edges of the one or more substrates. This ensures insulation between the main faces of the substrate(s) - in addition to insulation at the edges. This avoid any short circuit between the main faces of the substrate(s). Short circuits are avoided not only on the edges - by welding the insulating part on the edges of the substrate(s) - but also between the main faces of the substrate(s). In case of an arrangement with a single substrate, the substrate may be arranged to bring the same edge back on itself several times and to bring one main face facing another; the insulating layer 28 is between the main faces facing each other. In case of an arrangement with several substrates, the substrates may be arranged to have edges next to each other and to have one main face facing another; the insulating layer 28 is between the main faces facing each other. Possibly, the one or more substrates 12 are provided with an insulating layer 28 covering the main faces 14 or, at the arranging step, the insulating layer 28 is inserted between two main faces 14. On figures 1, 4, 6, the insulated material may be inserted between the stacked substrates 12 (as clearly visible on figure 6). On figures 3 and 5, the substrate(s) are wounded by inserting the insulated material between the spiral substrate(s). On figure 2, the substrate is isolated with the insulating layer 28 before being wounded. On all the figures, this ensures that the substrates are isolated from each other at all positions, including at the edges. Thus, the substrate(s) are assembled in an arrangement in order to avoid any vibrations and delamination, by still keeping the insulating properties between each substrate. The assembled arrangement is insulated from other electrical parts in order to guarantee the electrical safety, the magnetic arrangement being often connected either to the ground or to a positive or negative potential reference (case of electrodes).

Figure 10 illustrates this embodiment of the method in details. An arrangement is disclosed where the insulating layer 28 is between the substrates 12. The substrate(s) 12 may the same substrate, wound on itself, or at least two substrates, wound together, or stacked together. The insulating layer 28 may be for example a synthetic insulating resin, an insulating dielectric, an electrochemical separator or an electrolytic separator. The insulating layer 28 is between the main faces 14 of the substrate(s) 12 and is present on surface 18 corresponding to the welding area.

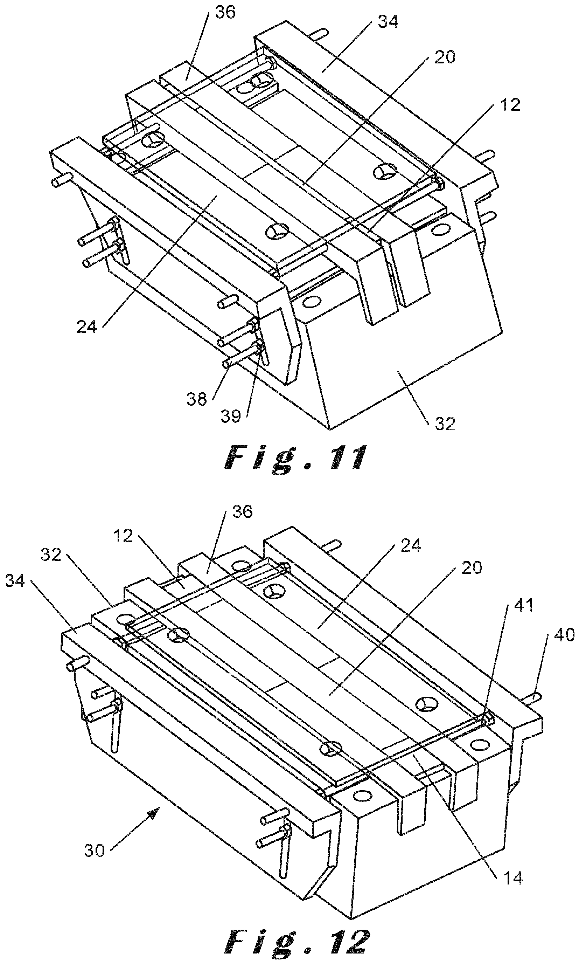

The implementation of the step consisting in applying pressure between insulating part 20 and substrate(s) 12 and the step consisting in welding can be achieved with a device 30 depicted on figures 11 and 12. According to figure 11, the device 30 makes it possible that the edge of the substrate(s) 12 are all located at the same level (horizontal or vertical plane) and that these edges are as close as possible during the steps. The contact pressure between the substrate(s) depends on the industrial application. Thanks to the device 30, the welding is enhanced and the assembly of the arrangement is of better quality over time. According to figure 12, in the embodiment where the main faces of the substrate(s) are also structured (and notably, specific zones at the top and bottom of the arrangement), the device makes it possible to structure these faces once the edges have been structured and heated (and thus fixed by welding). This device makes it possible to keep the substrate at the top or the bottom fixed and flat during the process and to avoid any deformation of the sheet.

The device 30 may comprise a table 32 on which vertical runners 34 and horizontal runners 36 are implemented to position the arrangement of substrate(s). The runners 34 are vertically movable between an upper position (figure 11 - where the position can be even higher) and a lower position (figure 12) to adapt the device 30 to the size, dimensions and orientation of the arrangement. Screws 38 and nuts 39 are adjusted and tightened so as to maintain the runners 34 in place (four pairs of two screws 38 and nuts 39 are given as examples on figures 11 and 12). The runners 36 are horizontally movable between a narrow position (figure 11) and an extended position (figure 12 - where the runners 36 can be even further extended) to adapt the device 30 to the size, dimensions and orientation of the arrangement. Screws 40 and nuts 41 are adjusted and tightened so as to maintain the runners 36 in place (two screws 40 and nuts 41 are given as examples on figures 11 and 12). On figure11, edges of substrate(s) 12 are all positioned at the same level (horizontal plane). The edges of substrate(s) are positioned and pressed together so as to form and position the surface 18 ready to be welded with the insulating part 20. The edges are exposed to the welding of the insulating part. The arrangement is changed in position if several welding steps have to be performed. On figure 12, a main face of the substrate(s) is exposed to the welding of the insulating part - in the embodiment where it is the case. The device 30 applies a pressure to the arrangement to maintain it firmly in position so that the welding step occurs precisely. For example, the welding may occur by laser (as depicted on figure 8 - which is more precise) or with a furnace (less expensive).

The arrangement may be maintained in a way that the surface 18 containing the welding area protrude above the upper face of the runner 36. This makes it possible to correctly place the insulating part 20 in contact with the surface 18. The cover 24 is transparent to the laser source 22 forming the welding beam. Consequently, the laser will not affect the insulating part 20 directly and instead will irradiate the surface 18 defined by the edges of the substrate(s) 12, heating up the surface 18. Then, the heat will be transferred to the insulating part 20 by heat conduction, resulting in a local melting of the insulating part at the interface between insulating part and surface 18, which will flow in the grooves. To perform this step, continuous IR laser source can be used. The laser can be combined with a scanner head system to move the laser according to arrow. There are also some parameters to optimize during this step, which are the laser power, laser speed and clamping force mainly.

The method of assembling the arrangement has the further advantage of enabling a disassembling method in order to recycle and reuse the elements of the arrangement 10. Thus, the invention also relates to a method for disassembling the arrangement obtained by the method of assembling, to separate the welded substrate-insulating part composite. This method aims at fast and efficient recycling of the composites after their industrial use. To do so, the method comprises a step of heating the insulating part. The insulating part is progressively soften until a point where the substrate(s) are not firmly retained by the insulating part melt into the groove. Several phases can be observed. During a first phase, the temperature increases before reaching a second phase where the heat reaches a saturation point. Consequently, additional heat increase is not needed to achieve the disassembling which is the third phase. By applying a temperature higher than the Vicat temperature, the insulating part is easily detached from the substrate(s).

An advantage of the method for disassembling (as well as the method for assembling) is that it can be automated - contrarily to solutions where the substrate(s) would be fixed with a welding directly applied to the substrate(s) or fixed by crimping with bars or rods through or around the substrate(s), or fixed by strapping with an insulated tape. In addition, the method of assembling does not damage the substrate(s) (as it is the case where the substrate(s) would be fixed by crimping with bars or rods through the substrate(s)); this makes it possible to reuse the substrate(s).

The heating may be performed with a laser source, a heat gun or a low temperature furnace. The laser source may be a continuous IR laser source. With laser source, the heating of the insulating part is performed by heating the one or more substrates. The heating of the insulating part 20 occurs by conduction heating through the substrate(s) 12. With the heat gun, less power is used. Both the substrate(s) 12 and the insulating part 20 are heated. With the furnace, both the substrate(s) 12 and the insulating part 20 are heated. The use of furnace requires less people operating the method.

The method of assembling the arrangement is less expensive contrarily to solutions where the substrate(s) would be fixed by crimping with bars or rods into holes drilled through the substrate(s) or into deep trenches cut at the outer edges of the substrate(s) (and especially if the substrate(s) are additionally laser treated to refine the cuts and drillings). The method of disassembling is also less expensive. Both the method of assembling and the method of disassembling may be automated.

The invention relates also to the arrangement 10 itself. The arrangement 10 comprises one or more electrically conductive substrates 12 having a thickness defining an edge. The arrangement further comprises the surface 18 defined by a plurality of edges of the one or more substrates 12, the surface 18 being structured with one or more grooves with a structuring laser beam. The arrangement 10 also comprises an insulating part 20 having a melting point lower than the melting point of the one or more substrates, the insulating part 20 having at least a portion melt into the one or more grooves of the surface 18. The arrangement has the above mentioned advantages. The arrangement is obtainable by the method of assembling.

Figure 13 illustrates an example of arrangement 10 in the form of a magnetic core of a DC choke, according to the invention and obtained according to the method of assembling of the invention. The arrangement 10 comprises one or more electrically conductive substrates 12 having a thickness defining an edge 16. For example, the substrates 12 are stacked together to form blocks 101 to 106. The substrates are parallel to the plan of figure 13 (the edges of the substrates are shown on blocks 101 and 102). The blocks 101 to 106 comprise the surface 18 defined by a plurality of edges 16 of the one or more substrates 12, the surface 18 being structured with one or more grooves with a structuring laser beam. The substrates 12 may be pressed together during the structuring step. The blocks 101 to 106 also comprise insulating part(s) 201 having a melting point lower than the melting point of the one or more substrates 12. The insulating parts 201 are placed and pressed against surfaces 18 before the one or more substrates 12 and the insulating parts 201 are welded by heating the one or more substrates so as to reach in the insulating parts a temperature melting at least a portion of the insulating parts into the one or more grooves of the surfaces (partially visible on the blocks to the perspective view of figure 13). Insulating parts 201 are applied on opposite sides of the blocks forming surface 18. Insulation parts 201 may be applied on the whole sides (like blocks 103-106) or on dedicated spots (like blocks 101, 102). Each block is assembled separately in an arrangement. According to one embodiment of the invention, insulating parts 203 may be placed, pressed and welded on structured (top and bottom) faces 14 of blocks 101, 102. Thus, a strap of insulating parts 201, 203 may be performed all around blocks 101, 102 - at one spot, possibly at several spots (for example, two spots on figure 13).

Once blocks 101 to 106 are each formed as an assembled arrangement, said blocks are assembled together, two pairs of blocks (103/104 and 105/106) are placed between blocks 101, 102. In order to assemble the six blocks, insulating parts 202 may be placed, pressed and welded on structured surface 18 of block 101, 102 and insulating parts 204 may be placed, pressed and welded on structured (top and bottom) faces 14 of the whole arrangement 10. Thus, a strap of insulating parts 202, 204 may be performed all around blocks 101 to 106 - at one spot, possibly at several spots (for example, two spots on figure 13) - to form the magnetic core of a DC choke. Windings of wires may be performed around blocks 103-104 and 105-106 so as to form coils.

The present invention has been described in relation to the specific embodiments which have a value that is purely illustrative and should not be considered to be limiting. The skilled person will notice that the invention is not limited to the examples that are illustrated and/or described here above. The invention comprises each of the new technical characteristics described in the present document, and their combinations.

## Claims

1. Method for assembling an arrangement (10) of one or more substrates (12), the method comprising
• Providing one or more electrically conductive substrates (12) having a thickness defining an edge (16) and at least one insulating part (20) having a melting point lower than the melting point of the one or more substrates (12);
• Arranging the one or more substrates (12) in an arrangement (10) in which at least one surface (18) is defined by a plurality of edges (16) of the one or more substrates (12);
• Structuring the at least one surface (18) with a structuring laser beam capable of manufacturing one or more grooves in the at least one surface (18);
• Placing the insulating part (20) in contact with the at least one surface (18);
• Applying a pressure to maintain contact between the insulating part (20) and the at least one surface (18);
• Welding the one or more substrates (12) and the insulating part (20) by heating the one or more substrates so as to reach in the insulating part a temperature melting at least a portion of the insulating part into the one or more grooves of the at least one surface (18).

2. Method according to claim 1, wherein the one or more substrates have a main face (14), the method further comprising, at the arranging step, arranging the one or more substrates (12) such that an insulating layer (28) is between two main faces.

3. Method according to the preceding claims, wherein, during the structuring step, a pressure is applied to the arrangement (10) to meet the same focusing conditions during the structuring of the surface (18).

4. Method according to any one of the preceding claims, further comprising
• At the arranging step, performing the arrangement (10) by winding or stacking the one or more substrates.

5. Method according to any of the preceding claims, wherein the one or more substrates are in the form of a foil, a sheet, a plate, a disc, a ribbon, a rod, or a wire.

6. Method according to any of the preceding claims, wherein the structuring laser specifications are:
• Wavelength (λ) between 300nm and 10.6µm, preferably between 900nm and 1100 nm, more preferably 1030nm;
• Pulse duration (τ) between 1fs and 1000fs, preferably 500fs;
• Focusing and spot size (φ) between 1µm up to 200µm, preferably 20µm;
• Laser power (P) between 1W and 300W, preferably 15W;
• Repetition frequency (f) between 1kHz and 10GHz, preferably 500kHz;
• Scanning speed (v) between 1mm/s and 400m/s, preferably 700mm/s.

7. Method according to any of the preceding claims, wherein a plurality of surfaces (18) are defined by a plurality of edges (16) of the one or more substrates (12), the method comprising
• Structuring the surfaces (18) with a structuring laser beam capable of manufacturing one or more grooves in the surfaces;
• Placing an insulating part on a respective surface;
• Applying a pressure so as to maintain contact between the insulating parts and the respective surface;
• Welding the one or more substrates (12) and the insulating parts (20) by heating the one or more substrates so as to reach in the insulating parts a temperature melting at least a portion of the insulating parts into the one or more grooves of the surface.

8. Method according to any of the preceding claims, wherein the arrangement has top and bottom main faces (14) linking two surfaces (18) defined by a plurality of edges (16), the method further comprising
• Providing insulating parts (20) having a melting point lower than the melting point of the one or more substrates;
• Structuring the top face (14) and/or bottom face (14) with the structuring laser beam capable of manufacturing one or more grooves in the top face (14) and/or bottom face (14);
• Placing an insulating part (20) in contact respectively with the top face (14) and/or bottom face (14);
• Applying a pressure so as to maintain contact between the insulating part (20) and the respective top face (14) and/or bottom face (14);
• Welding the one or more substrates (12) and the insulating part (20) by heating the one or more substrates (12) so as to reach in the insulating part (20) a temperature melting at least a portion of the insulating part (20) into the one or more grooves of the top face (14) and/or bottom face (14).

9. Method according to one of the preceding claims, further comprising
• Providing a device (30) comprising vertical and horizontal runners (34, 36) and a cover (24);
• During the step of applying a pressure, pressing the cover (24) on the insulating part (20) to maintain contact between the insulating part (20) and the at least one surface (18) and pressing the runners on the one or more substrates (12).

10. Method for disassembling the arrangement (10) obtained by the method of any one of the preceding claims, comprising a step of heating the insulating part.

11. Method according to the preceding claim, wherein the heating is performed with a laser source heating the one or more substrates, a heat gun or a low temperature furnace.

12. Arrangement (10) comprising one or more electrically conductive substrates (12) having a thickness defining an edge, the arrangement further comprises
• At least one surface (18) defined by a plurality of edges (16) of the one or more substrates (12), the at least one surface (18) being structured with a structuring laser beam capable of manufacturing one or more grooves and
• An insulating part (20) having a melting point lower than the melting point of the one or more substrates (12), the insulating part (20) having at least a portion melt into the one or more grooves of the at least one surface (18).

13. Arrangement according to claim 12, wherein the one or more substrates (12) have a main face (14), the arrangement comprising an insulated layer (28) between two main faces (14).

14. Arrangement according to claims 12 or 13, wherein the arrangement has top and bottom main faces (14) linking two surfaces (18) defined by a plurality of edges, the arrangement comprising
• Insulating parts (20) having a melting point lower than the melting point of the one or more substrates, the insulating parts (20) having at least a portion melt into the one or more grooves of the top face and/or bottom face.

15. Arrangement according to claims 12 to 14, wherein the arrangement is a winding or a stack of one or more substrates in the form of a foil, a sheet, a plate, a disc, a ribbon, a rod, or a wire.
